# EUROPEAN PATENT SPECIFICATION

(11) **EP 1 553 850 B1**
(45) Date of publication and mention of the grant of the patent: **27.02.2008**
(21) Application number: 03809261.5
(22) Date of filing: 29.08.2003
(51) Int. Cl.: A23L 1/212, A23B 7/005

(54) **METHOD FOR MAKING A PUREE COMPOSITION COMPRISING A STABILIZED FRUIT PULP COMPOSITION**
VERFAHREN ZUR HERSTELLUNG EINER PUREEZUSAMMENSETZUNG ENTHALTEND EINE STABILISIERTE FRUCHTMARKZUSAMMENSETZUNG
PROCEDE POUR LA PREPARATION D'UNE COMPOSITION DE PUREE COMPRENANT UNE COMPOSITION DE PULPE DE FRUIT STABILISEE

(30) Priority: 23.10.2002 US 278470
(43) Date of publication of application: 20.07.2005
(73) Proprietor: UNILEVER N.V., 3013 AL Rotterdam (NL); UNILEVER PLC, London, Greater London EC4P 4BQ (GB)
(72) Inventor: LEVI, Guy, New Jersey, NJ 07484 (US); MOSTERT, Martina Adriana Unilever R &D Vlaardingen, NL-3133 AT Vlaardingen (NL)
(74) Representative: Rosen Jacobson, Frans Lucas M.
(86) International application number: PCT/EP2003/009649
(87) International publication number: WO 2004/037017

(56) References cited:
- US-A- 2 641 548
- US-A- 2 647 838
- US-A- 3 958 036
- US-A- 5 871 794
- SIMS C A ET AL: "Challenges to processing tropical fruit juices: banana as an example." PROCEEDINGS OF THE FLORIDA STATE HORTICULTURAL SOCIETY 1994 FOOD SCI. & HUMAN NUTR. DEP., UNIV. OF FLORIDA, IFAS, GAINESVILLE, FL 32611-0370, USA, vol. 107, 1994, pages 315-319, XP0008025210
- ASKAR A ET AL: "Trubstabile und hochwertige Nektare aus tropischen Früchten." CONFRUCTA STUDIEN SUEZ CANAL UNIV., ISMAILIA, EGYPT, vol. 36, no. 5/6, 1992, pages 130-153, XP0008025208
- JIMENEZ M E ET AL: "Effects of microwave energy on enzymatic browning of avocado paste." INFORMACION TECNOLOGICA 12 (6) 2001 INST. POLITEC. NACIONAL, ESCOLA SUPERIOR DE INGENIERIA QUIMICA E IND. EXTRACTIVAS, ZACATENCO, 07738 MEXICO, DF, MEXICO, 2001, pages 47-50, XP0008025207
- ABD-EL-AL M G ET AL: "Application of microwave energy in the heat treatment of fruit juices, concentrates, and pulps." FLÜSSIGES OBST 1994 DEP. OF FOOD TECH., SUEZ CANAL UNIV., ISMAILIA, EGYPT, vol. 61, no. 10, 1994, pages 307-312, XP0008025211
- ALMEIDA M E M ET AL: "The control of polyphenol oxidase activity in fruits and vegetables. A study of the interactions between the chemical compounds used and heat treatment." PLANT FOODS FOR HUMAN NUTRITION 1995 DEP. OF FOOD TECH., FEA-UNICAMP, CP 6121 CAMPINAS, SAO PAULO, BRAZIL, vol. 47, no. 3, 1995, pages 245-256, XP0008025209

## Description

### FIELD OF THE INVENTION

The present invention is directed to a method for making a stable purce composition comprising a stabilized fruit pulp composition. More particularly, the invention is directed to said method for making a stable purce composition wherein the method does not include chemical treatment, high vacuum processing and applying temperatures over about 90°C. The stable purce composition made according to the present invention unexpectedly has an extended shelf life at about ambient temperature, has a viscosity of at least about 5,000 centipoise, and is suitable for human consumption.

### BACKGROUND OF THE INVENTION

Consumption of nutrients, like antioxidants and folic acid, which are abundant in fruits and vegetables, has been linked to a lower incidence of cardiovascular disease. Moreover, it is well settled that eating fruits high in soluble fiber can reduce cholesterol levels which protects against atherosclerosis.

Other advantages of having a diet high in fruit include better athletic performances, reduced risk of developing chronic bronchitis, a lowered risk of getting most common cancers (including breast cancer), as well as a lowered risk of getting cataracts.

While food products, like dressings, dips and spreads, comprising fruits have been linked to health benefits in humans, such products are often difficult to prepare for sale in commerce. This is true because the quality of food products comprising fruit often deteriorates (e.g., browns, darkens, grows mold and/or loses flavor) due to enzymatic reactions within the food product, thereby resulting in a product that has a short shelf life and does not have an appealing look or taste after spending a limited period of time in conventional commercial channels.

Known techniques have been used to inhibit the deterioration of food products comprising fruits. These known techniques include pasteurization of the fruit, high vacuum processing for removing oxygen, and chemically treating the fruit with sulfiting agents before making the food product. The above-described known techniques do not eliminate, for example, browning and darkening in food products comprising fruit, and such techniques have adverse effects on the flavor, aroma, texture and nutritional value of the fruits treated, as well as the food products prepared therefrom.

It is of increasing interest to develop a stable puree composition including a stabilized fruit pulp composition (i.e., food product) that does not, for example, easily brown, darken and lose flavor and that has an extended shelf life at about ambient temperature. This invention, therefore, is directed to a method for making a stable purce composition which does not include the steps of to chemical treatment, high vacuum processing and applying temperatures over about 90°C. The stable purce composition made according to this invention has a viscosity of at least about 5,000 mPa.s (centipoise). Moreover, the stable puree composition prepared according to the invention unexpectedly has an extended shelf life at about ambient temperature and substantially the same visual, texture, aroma and taste attributes of a puree composition made on demand from freshly picked fruits.

### ADDITIONAL INFORMATION

Efforts have been disclosed for making fruit pump. In U.S. Patent No. 5,384,147, a method for processing avocado pulp is described.

Other efforts have been disclosed for making stabilized fruit. In U.S. Patent No. 5,871,794, a guacamole composition with tomatillo pulp is described.

Still other efforts have been disclosed for making creamy food formulations. In U.S. Patent No. 6,284,303, a vegetable based creamy food is described.

None of the additional information above describes a stabilized fruit pulp that has not been subjected to chemical treatment, high vacuum processing and temperatures that exceed about 90°C.

Furthermore the following prior art documents are briefly discussed.

US Patent No. 2,641,548 discloses a method of preserving avocados wherein a stabilized avocado mash is obtained by heat treatment at 85°C for 1 minute. Proc. Fla. State Hort. Soc., 107, 1994, pages 315-319 discloses a stabilized banana puree obtained by heat treatment at 85°C for 1-2 minutes. Confructa Studien, vol. 36 (5/6), 1992, pages 130-153 discloses a stabilized mango (or other tropical fruit) pulp obtained by heat treatment at 90°C for 1 minute. US Patent No. 3,958,036 discloses a stable avocado puree. US Patent No. 5,871,794 discloses a stabilized avocado product further comprising about 10% tomatillo and obtained by heat treatment at 85-90°C for 3 minutes. US patent No. 2,647,838 discloses a stabilized banana puree obtained by heat treatment at 80°C for about 30 seconds. Information Technologica, vol. 12(6), 2001, pages 47-50 discloses a stabilized avocado paste obtained by heat-treatment at 80°C for about 30 seconds. Flüssiges Obst, vol. 61(10), 1994, pages 307-312, discloses stabilized mango, papaya or guava pulps obtained by heat treatment for less than about 1 minute in a microwave. Plant Foods for Human Nutrition, vol. 47(3), 1995 (pages 245-256) discloses a study on the control of polyphenol oxidase activity in fruits and vegetables.

### SUMMARY OF THE INVENTION

Accordingly, the present invention is directed to a method for making a stable puree composition comprising:
(a) at least about 20.0 by weight water;
(b) from about 0.01 to about 10.0% by weight thickening base; and
(c) 5.0 to about 75.0% by weight of a stabilized fruit pulp composition,
wherein the puree composition has a viscosity from about 5,000 to about 90,000 (preferably from about 18,000 to about 30,000 centipoise) mPa.s (centipoise), and a shelf life at about ambient temperature of at least about 65 days, said method being further specified in claim 1.

Fruit, as used herein, means the ripening part of a plant and usually the seed bearing part of a plant. Oil means naturally occurring triglycerides and their derivatives found in (i.e., originating in) the stabilized fruit pulp composition. Stabilized (or stable) means substantially no mold growth, browning, darkening and flavor loss for at least about 65 days, and preferably, for at least about 85 days when kept in a covered (i.e., sealed) package at about ambient temperature.

Puree is defined to mean a composition comprising stabilized fruit pulp composition and thickening base whereby the composition can be used, for example, as a dressing, dip, spread, baking additive, cooking additive, or any combination thereof.

Thickening base is defined to mean an agent that can be flavored and colored to mimic most characteristics of the stabilized fruit pulp composition and aid in viscosity maintenance of the stable puree composition prepared therefrom.

Viscosity, as used herein, means deformation properties obtained with a Haake Rheometer equipped with a set of concentric, bob-in-cup, cylinders (3mm gap) wherein the bob employed has a diameter of 30.4mm, the cup has a diameter of 42mm, and shearing occurs by ramping cylinder oscillation at a rate from 0 to 135 reciprocal seconds at ambient temperature. Viscosity reported is taken at a shear rate of 10 reciprocal seconds.

Hardness factor, as used herein, means the hardness value obtained on a 4 mm thick slice of fruit (using a TA-TX2 Texture Analyzer made available by SMS Stable Micro Systems) at ambient temperature being subjected to compression using a 50 kg load cell moving at 1mm/sec, with the hardness factor being determined from the observed first peak in a force distance curve.

### DETAILED DESCRIPTION OF THE PREFERRED EMBODIMENTS

There is no limitation with respect to the type of fruit that may be used to make the stable puree composition of the present invention, as long as the fruit is one that is suitable for human consumption. Often, the fruit used in this invention is an avocado, banana, mango, guava, fig, papaya, kiwi, star fruit, pineapple, combination thereof, or the like. In a most preferred embodiment, the fruit employed in this invention is avocado.

When selecting the fruit to make the stable puree composition of this invention, the fruit is picked from about 1 to about 4 weeks, and preferably, from about 1 to about 3 weeks, and most preferably, from about 2 to about 3 weeks prior to being ripe. The picked fruit is then stored in a dark room (at a temperature between about 10°C to about 35°C) for less than about 1.5 weeks, and preferably, less than about 1 week, and most preferably, less than about 3 days. In an especially preferred embodiment, the fruit selected for use in this invention, after being picked or harvested, is subjected to storage conditions of relative humidity between about 40-70%, and most preferably, between about 50-65%.

When preparing the fruit selected for use in the method of this invention, the fruit is, in no particular order, peeled and depitted or cored, if necessary. The resulting fruit flesh is then mashed to a desired texture or consistency to produce fruit pulp. In a preferred embodiment, the fruit pulp produced is prepared from fruit having a hardness factor from 0.003 to 0.03 N (from 300 dynes to 3,000 dynes). The fruit pulp is then heated (e.g., in a water bath, in an oven, microwave oven, or with adiabatic heating in a high pressure vessel) to a temperature from about 30°C to a temperature not over about 90°C for less than about 3 minutes, and preferably, from about 10 seconds to about 2.5 minutes, thereby producing a stabilized fruit pulp having from about 0.01 to about 20.0% (preferably at least about 5.0% and most preferably at least about 10.0%) by weight oil and substantially no active enzymes (i.e., all quality detrimental enzymes like amylase, lipoxyginase, polyphenol oxidase are substantially inactivated).

In the method of the invention, acidulant is added to and mixed within the fruit pulp prior to heating. It makes up from about 0.01 to about 5.0% by weight of the fruit pulp being heated. The acidulant which may be used in this invention includes those which are typically used in food compositions, like lactic acid, citric acid, sorbic acid, hydrochloric acid, ascorbic acid, phosphoric acid, mixtures thereof, and the like.

There is no limitation with respect to the thickening base which may be used in the method of this invention as long as the base is suitable for human consumption. Such a thickening base is typically a citrus fiber or vegetable puree (or mixture thereof) containing composition comprising water insoluble fibers. Therefore, the thickening base employable in the method of this invention has food components derived from, for example, plant material that are generally resistant to digestion and absorption in the human small intestine. The thickening base can be, for example, sweetened or unsweetened applesauce, or sweetened or unsweetened cellulosic material derived from the core of an orange or other citrus fruits. Such a cellulosic material can comprise rag and small amounts of peel from the citrus fruit. Typically, the citrus fiber that makes up the thickening base used in the method of the present invention is substantially similar to or the same as the texturizing properties of the stabilized fruit pulp composition used to make the stable puree composition of this invention. Preferably, the citrus fiber within the thickening base, in dry form, has a particle size from about 50 microns to about 200 microns, including all ranges subsumed therein, and the types of thickening bases that may be used in this invention include those made commercially available from suppliers like Herbstreith & Fox, BASF Corporation and FMC Corporation.

In the method for making the stable puree composition of the present invention, from about 20.0 to about 95.0%, and preferably, from about 25.0 to about 75.0%, and most preferably, from about 50.0 to about 65.0% by weight water is combined with from about 0.01 to about 10.0%, and preferably, from about 0.01 to about 7.5%, and most preferably, from about 1.0 to about 3.5% by weight thickening base, based on total weight of the stable puree composition and including all ranges subsumed therein. The resulting base combination is then mixed (preferably with conditions at ambient temperature and atmospheric pressure) to produce a base suspension.

Optional additives may be employed in this invention, and added, for example, to the base combination. The optional additives which may be used include artificial and natural food grade flavors and colors; protein powders like whey protein; preservatives like potassium sorbate and sodium benzoate; gums like pectin, xanthan gum and guar gum; emulsifiers like monoglycerides, diglycerides, and polysorbate; acids to modify pH like lactic acid and hydrochloric acid; spices like salt, ginger, nutmeg, basil, cinnamon, onion, garlic and pepper; and texturizing agents like microcrystalline cellulose (e.g., Avicel as made available by FMC Corporation) .

While such optional additives may be added at anytime during the process for making the stable puree composition of this invention, they are preferably added to the base combination and just prior to generating the base suspension. In a preferred embodiment, however, when flavor is a desired optional additive, the flavor is added in the method of the invention just prior to generating the puree composition. In yet another preferred embodiment, about 5.0 to about 10.0% by weight of the total water added to make the base suspension is added with the optional additives.

The flavors used in the method of this invention may be added according to taste and the colors are added according to color preferences. The acids to modify pH are added to bring the pH of the stable puree composition to at least about 3.0, but less than or equal to about 4.5. The preferred amount of acid added to the base combination results in a stable puree composition having a pH from about 3.3 to about 4.2. The emulsifiers and preservatives are added to enhance stability of the puree composition. The spices employed are added to taste, the gums are added to maintain a desired stable puree composition viscosity and the protein powders are added as desired. Generally, the amount of optional additives employed in the puree composition does not exceed 10.0% by weight of the total weight of the stable puree composition.

Subsequent to generating the base suspension, the same is subjected to a standard colloid mill having gap widths from about 125 microns to about 1250 microns, and preferably, from about 250 microns to about 750 microns, or a homogenizer operating under pressures from about 30 to about 300 bar. The resulting milled or homogeneous suspension is then combined with stabilized fruit pulp composition to produce the stable puree composition of this invention. The amount of stabilized fruit pulp composition employed is from about 5.0 to about 75.0%, and preferably, from about 10.0 to about 50.0%, and most preferably, from about 15.0 to about 25.0% by weight stabilized fruit pulp composition, based on total weight of the stable puree composition.

In an especially preferred embodiment, a fat additive may be added to the base suspension. Such a fat additive can be natural or synthetic and is a component delivered to the stable puree composition distinct from any oil delivered with the stabilized fruit pulp composition. The fat additive can be, for example, corn oil, cotton seed oil, olive oil, canola oil, palm oil, safflower oil, rapeseed oil, soybean oil, mixtures thereof and the like. The fat additive may also be a fat substitute such as fatty acid-esterified propoxylated glycerin compositions as well as sucrose fatty acid polyesters. When employed, the fat additive makes up from about 0.5 to about 25.0%, and preferably, from about 5.0 to about 20.0% by weight of the puree composition, based on total weight of the stable puree composition.

The stable puree composition made by the method of this invention is suitable for numerous food applications. For example, the composition may be used as a dressing, dip or spread, or as cooking or baking additive. Such a stable puree composition can be packaged in conventional food packaging (e.g., plastic or glass bottles) and hot filling (i.e., pasteurization) is not required to maintain product stability.

The following examples are provided to facilitate an understanding of the present invention. The examples are not intended to limit the scope of the invention as set forth in the claims.

### Example 1

Avocado, having a hardness factor of about 0.003 N (about 300 dynes), was harvested about 2.5 weeks prior to being ripe and stored in a dark room kept at about 25°C (relative humidity about 55%) for about two (2) days.

The avocado was cut in half and depitted to produce an avocado half. The avocado half was peeled, mashed and mixed with 0.5% by weight ascorbic acid and then heated to about 85°C for 3.0 minutes. The heated mashed avocado was cooled, thereby producing stabilized avocado pulp composition having about 15% by weight oil and 80.0% by weight water, with substantially no active polyphenol oxidase.

### Example 2

A base suspension was prepared by mixing the following ingredients:

| Ingredient | Weight % |
|---|---|
| Thickening Agent (Citrus Fiber) | 3.0% |
| Sunflower Oil | 12.0% |
| Whey Protein | 0.5% |
| Pectin | 0.3% |
| Potassium Sorbate | 0.1% |
| Water | Balance |

The resulting base composition was mixed to produce a base suspension. The base suspension was homogenized in a homogenizer at a pressure of about 150 bar to produce a homogenized suspension.

### Example 3

A stable puree composition was made by mixing 80% by weight of the milled suspension of Example 2 with 20% by weight of the stabilized avocado pulp of Example 1. The stable puree composition was sealed in a package and kept at ambient temperature. After about 85 days, the package was opened and no browning, darkening, mold formation or flavor loss was observed on the stable puree composition of this invention.

### Comparative Example

A puree composition similar to the one described in Example 3 was made except that the avocado pulp added to the milled suspension did not have the hardness factor of the avocado used in Example 2 and was not picked, stored and heated under the conditions described in Example 1. The resulting puree composition was sealed in a package at and kept at ambient temperature. After about one (1) day, the package was opened and browning and darkening was observed on the puree composition. The product was essentially not suitable for human consumption. After about 14 days, mold was observed on the puree composition and the product was essentially not safe for human consumption.

The results of the experiments above indicate that puree compositions prepared using the method of this invention, unexpectedly, have a superior shelf life.

## Claims

1. A method for making a stable puree composition comprising the steps of:
(a) harvesting fruit about 1 to 4 weeks prior to being ripe;
(b) storing the harvested fruit in a dark room at a temperature from about 10°C to about 35 °C for less than about 1.5 weeks;
(c) in no particular order, peeling, depitting or coring, if necessary, the fruit and mashing the fruit to produce fruit flesh;
(d) mixing the fruit flesh with about 0.01 to about 5.0% by weight acidulant to produce an acidulant and fruit flesh mixture;
(e) heating the acidulant and fruit flesh mixture to a temperature of from 30 to 90 °C for less than about 3 minutes to obtain a stabilized fruit pulp composition comprising 75-99% by weight water, fruit pulp and 0.01-20% by weight oil; and
(f) generating a base suspension by mixing water and thickening base, subjecting said base suspension to a standard colloid mill having gap widths from about 125 microns to about 1250 microns or a homogenizer operating under pressures from about 30 to about 300 bar, and combining the resulting base suspension with said stabilized fruit pulp composition so as to produce a stable puree composition comprising;
(i) at least about 20.0% by weight water;
(ii) from about 0.01% to about 10.0% by weight thickening base;
(iii) from about 5% to about 75% by weight of stabilized fruit pulp composition,
wherein the puree composition has a viscosity from about 5,000 to about 90,000 mPa.s (centipoise), and a shelf life at about ambient temperature of at least about 65 days, wherein the fruit has a hardness factor of at least 0.003 Newton (300 dynes) prior to heating, and wherein the stable puree composition has a pH from at least about 3.0 to less than or equal to about 4.5.

2. The method according to claim 1, wherein the fruit is avocado, banana, mango, guava, fig, papaya, kiwi, star fruit, pineapple or a mixture thereof.

3. The method according to claim 1, wherein the stabilized fruit pulp composition has substantially no quality detrimental enzyme activity after heating.

4. The method according to claim1, wherein the thickening base is a citrus fiber, vegetable puree, or a mixture thereof.

5. The method according to claim 1, wherein the thickening base is a citrus fiber having a particle size from about 50 microns to about 200 microns.

6. The method according to claim 1, wherein the fruit pulp is avocado puip.

7. The method according to claim 1, wherein the stable puree composition can be used as a dressing, dip, spread, cooking additive or baking additive.

8. The method according to claim 1, wherein a fat additive is added to the base suspension at a concentration of from about 0.5 to about 25% by weight based on the total weight of the stable puree composition.

9. The method according to claim 1, wherein an additive selected from food grade flavoring, food grade coloring, protein powder, preservative, emulsifier, acid, spices, texturizing agent or a mixture thereof is added during said method.

10. The method according to claim 1, wherein the fruit is subjected to storage conditions of relative humidity between about 40-70% before being heated.

## Patentansprüche

1. Verfahren zum Herstellen einer stabilen Püreezusammensetzung, welches die Schritte umfasst:
(a) Ernten von Frucht etwa 1 bis 4 Wochen bevor sie reif ist;
(b) Lagern der geernteten Frucht in einem dunklen Raum bei einer Temperatur von etwa 10°C bis etwa 35°C für weniger als etwa 1,5 Wochen;
(c) in keiner besonderen Reihenfolge Schälen, Entsteinen oder Entkernen, falls notwendig, der Frucht und Zerdrücken der Frucht, um Fruchtfleisch herzustellen;
(d) Mischen des Fruchtfleisches mit etwa 0,01 bis etwa 5,0 Gew.-% Säuerungsmittel, um ein Säuerungsmittel und Fruchtfleisch-Gemisch herzustellen;
(e) Erwärmen des Säuerungsmittels und Fruchtfleisch-Gemisches auf eine Temperatur von 30 bis 90°C für weniger als etwa 3 Minuten, um eine stabilisierte Fruchtbreizusammensetzung zu erhalten, welche 75-99 Gew.-% Wasser, Fruchtbrei und 0,01-20 Gew.-% Öl umfasst; und
(f) Erzeugen einer Basesuspension durch Mischen von Wasser und Verdickungsbase, Unterwerfen besagter Basesuspension unter eine Standard-Kolloidmühle mit Öffnungsbreiten von etwa 125 Mikron bis etwa 1250 Mikron oder einen Homogenisator, welcher unter Drucken von etwa 30 bis etwa 300 bar arbeitet, und Vereinigen der sich ergebenden Basesuspension mit besagter stabilisierter Fruchtbreizusammensetzung, um so eine stabile Püreezusammensetzung herzustellen, umfassend:
(i) mindestens etwa 20,0 Gew.-% Wasser;
(ii) von etwa 0,01 Gew.-% bis etwa 10,0 Gew.-% Verdickungsbase;
(iii) von etwa 5 Gew.-% bis etwa 75 Gew.-% stabilisierte Fruchtbreizusammensetzung,
wobei die Püreezusammensetzung eine Viskosität von etwa 5000 bis etwa 90000 mPa.s (Centipoise) und eine Lagerbeständigkeit bei etwa Umgebungstemperatur von mindestens etwa 65 Tagen hat, wobei die Frucht vor dem Erwärmen einen Härtefaktor von mindestens 0,003 Newton (300 Dyn) hat und wobei die stabile Püreezusammensetzung einen pH von mindestens etwa 3,0 bis weniger als oder gleich etwa 4,5 hat.

2. Verfahren gemäß Anspruch 1, worin die Frucht Avocado, Banane, Mango, Guave, Feige, Papaya, Kiwi, Sternfrucht, Ananas oder ein Gemisch davon ist.

3. Verfahren gemäß Anspruch 1, worin die stabilisierte Fruchtbreizusammensetzung nach dem Erwärmen im Wesentlichen keine für die Qualität schädliche Enzymwirksamkeit hat.

4. Verfahren gemäß Anspruch 1, worin die Verdickungsbase eine Zitrusfaser, Pflanzenpüree oder ein Gemisch davon ist.

5. Verfahren gemäß Anspruch 1, worin die Verdickungsbase eine Zitrusfaser mit einer Partikelgröße von etwa 50 Mikron bis etwa 200 Mikron ist.

6. Verfahren gemäß Anspruch 1, worin der Fruchtbrei Avocadobrei ist.

7. Verfahren gemäß Anspruch 1, worin die stabile Püreezusammensetzung als Dressing, Tunke, Aufstrich, Zusatzmittel zum Kochen oder Zusatzmittel zum Backen verwendet werden kann.

8. Verfahren gemäß Anspruch 1, worin ein Fett-Zusatzmittel bei einer Konzentration von etwa 0,5 bis etwa 25 Gew.-% basierend auf dem Gesamtgewicht der stabilen Püreezusammensetzung zur Basesuspension zugegeben wird.

9. Verfahren gemäß Anspruch 1, worin ein Zusatzmittel, ausgewählt aus nahrungsmittelgeeignetem Aromastoff, nahrungsmittelgeeignetem Farbstoff, Proteinpulver, Konservierungsstoff, Emulgator, Säure, Gewürzen, Texturierungsmittel oder einem Gemisch daraus während des besagten Verfahrens zugegeben wird.

10. Verfahren gemäß Anspruch 1, worin die Frucht Lagerungsbedingungen von relativer Feuchtigkeit zwischen etwa 40-70% unterworfen wird, bevor sie erwärmt wird.

## Revendications

1. Méthode de fabrication d'une composition de purée stable comprenant les étapes consistant à :
(a) récolter les fruits environ 1 à 4 semaines avant leur arrivée à maturité ;
(b) conserver les fruits récoltés à l'obscurité et à une température d'environ 10 à environ 35 °C pendant moins de 1,5 semaines ;
(c) peler, dénoyauter ou vider, si nécessaire et dans n'importe quel ordre, les fruits, puis les écraser pour obtenir de la chair de fruit ;
(d) mélanger la chair des fruits avec environ 0,01 à environ 5,0 % en poids d'acidulant pour produire un mélange acidulant et chair de fruit ;
(e) chauffer le mélange acidulant et chair de fruit jusqu'à une température de 30 à 90 °C pendant moins d'environ 3 minutes afin d'obtenir une composition de pulpe de fruit stabilisée comprenant 75 à 99 % en poids d'eau, de la pulpe de fruit et 0,01 à 20 % en poids d'huile ; et
(f) produire une suspension de base en mélangeant eau et base épaississante, soumettre ladite suspension de base à un moulin colloïdal standard présentant une largeur des vides d'environ 125 à environ 1 250 microns ou à un homogénéisateur fonctionnant sous une pression d'environ 30 à environ 300 bars et combiner la suspension de base résultante avec ladite composition de pulpe de fruit stabilisée de façon à obtenir une composition de purée stable comprenant :
(i) au moins 20,0 % en poids d'eau ;
(ii) d'environ 0,01 % à environ 10,0 % en poids de base épaississante ;
(iii) d'environ 5 à environ 75 % en poids de composition de pulpe de fruit stabilisée,
ladite composition de purée présentant une viscosité d'environ 5 000 à environ 90 000 mPa.s (centipoises) et une durée de conservation avant vente à température ambiante ou à peu près d'au moins environ 65 jours, le fruit présentant un facteur de dureté d'au moins 0,003 newtons (300 dynes) préalablement au chauffage et la composition de purée stable ayant un pH supérieur à environ 3,0 et inférieur ou égal à environ 4,5.

2. Méthode selon la revendication 1, le fruit étant de l'avocat, de la banane, de la mangue, de la goyave, de la figue, de la papaye, du kiwi, de la carambole, de l'ananas ou un mélange de ceux-ci.

3. Méthode selon la revendication 1, grâce à laquelle pratiquement aucune activité enzymatique nuisant à la qualité n'est présente dans la composition de pulpe de fruit stabilisée après chauffage.

4. Méthode selon la revendication 1, dans le cadre de laquelle la base épaississante est constituée de fibres d'agrumes, d'une purée de légumes, ou d'un mélange de celles-ci.

5. Méthode selon la revendication 1, dans le cadre de laquelle la base épaississante est constituée de fibres d'agrumes présentant une taille des particules d'environ 50 à environ 200 microns.

6. Méthode selon la revendication 1, dans laquelle la pulpe de fruit est une pulpe d'avocat.

7. Méthode selon la revendication 1, dans laquelle la composition de purée stable peut être utilisé en tant qu'assaisonnement, trempette, pâte à tartiner, additif de cuisson au four ou additif de cuisson.

8. Méthode selon la revendication 1, dans le cadre de laquelle un additif de matière grasse est ajouté à la suspension de base à une concentration d'environ 0,5 à environ 25 % en poids sur la base du poids total de la composition de purée stable.

9. Méthode selon la revendication 1, dans le cadre de laquelle est ajouté un additif sélectionné parmi des arômes de qualité alimentaire, des colorants de qualité alimentaire, des poudres de protéine, des conservateurs, des émulsifiants, des acides, des épices, des agents de texture ou un mélange de ceux-ci.

10. Méthode selon la revendication 1, dans le cadre de laquelle le fruit est conservé dans des conditions d'humidité relative de l'ordre de 40 à 70 % avant d'être chauffé.
